Europäisches Patentamt

European Patent Office

Office européen des brevets

(11) Numéro de publication: **0 401 450**
**A1**

(12) **DEMANDE DE BREVET EUROPEEN**

(21) Numéro de dépôt: 89440055.5

(22) Date de dépôt: **08.06.89**

(51) Int. Cl.5: **A23B 7/08, A23G 3/00**

(43) Date de publication de la demande:
**12.12.90 Bulletin 90/50**

(84) Etats contractants désignés:
**AT BE CH DE ES FR GB GR IT LI LU NL SE**

(71) Demandeur: **C.E.E.M.A.T.- CENTRE D'ETUDES ET D'EXPERIMENTATION DU MACHINISME AGRICOLE TROPICAL**
**Domaine de Lavalette 73 rue J.F. Breton**
**F-34000 Montpellier(FR)**

(72) Inventeur: **Guilbert, Stéphane**
**10 rue de l'ancien courrier**
**F-34000 Montpellier(FR)**

(74) Mandataire: **Arbousse-Bastide, Jean-Claude Philippe**
**CABINET ARBOUSSE BASTIDE 20, rue de Copenhague**
**F-67000 Strasbourg(FR)**

(54) **Procédé de fabrication de tranches semi-confites de kiwi-fruits.**

(57) Des fruits renfermant environ 10 % de sucre sont soumis, après pelage et découpage en tranches de 3 à 4 mm d'épaisseur, à un blanchiment suivi d'une déshydratation osmotique par passages successifs dans des sirops de sucres de concentrations croissantes additionnés de quantités également croissantes de dioxyde de soufre, de chlorure de calcium et d'acide citrique, le temps d'immersion dans chaque sirop variant de 12 heures à 48 heures, les produits ainsi obtenus étant ensuite soumis, selon le cas, à un séchage, une pasteurisation ou une congélation.

EP 0 401 450 A1

## Procédé de fabrication de tranches semi-confites de kiwi-fruits.

La présente invention a pour objet un procédé de fabrication de tranches semi-confites de kiwi-fruits en vue de leur conservation par séchage, pasteurisation ou congélation.

Le kiwi-fruit est de plus en plus largement commercialisé dans les pays européens, dont la plupart en pratiquent désormais la culture. Outre ses qualités organoleptiques, l'aspect décoratif de ses tranches est à la base de son succès, qui a conduit à envisager la fabrication de tranches de kiwi semi-confites destinées à être soit séchées soit conservées par pasteurisation ou congélation.

Toutefois les caractéristiques du kiwi-fruit, en particulier la couleur verte de ses tranches et leur tendance au brunissement, ne permettent pas de leur appliquer les techniques de déshydratation connues à ce jour.

Des essais systématiques effectués par la demanderesse dans le but d'obtenir des tranches de kiwi-fruit conservant dans le temps la couleur et la texture des fruits ont permis de mettre au point le procédé qui fait l'objet de la présente invention.

Le procédé selon l'invention se caractérise essentiellement en ce qu'il consiste à utiliser des fruits renfermant environ 10 % de sucre et à soumettre ces fruits, après pelage et tranchage, aux traitements successifs ci-après :

a) blanchiment des tranches de fruits ;

b) déshydratation osmotique par immersion des tranches blanchies dans des sirops de sucre de concentations croissantes additionnés de quantités également croissantes de dioxyde de soufre, de chlorure de calcium et d'acide citrique, le temps d'immersion dans chaque sirop étant compris entre 12 heures et 48 heures ;

c) séchage, pasteurisation ou congélation des tranches obtenues.

Les kiwis-fruits utilisés dans le procédé selon l'invention sont avantageusement des fruits dont la teneur en sucre est voisine de 10 %, et soit des fruits traités dès la récolte normale pour la vente en produits frais, soit des fruits "verts", c'est-à-dire récoltés 15 à 21 jours avant la récolte normale et conservés pendant plusieurs mois à 0° C : les fruits verts présentent en effet à la cueillette une teneur en sucre de l'ordre de 5 %, qui augmente progressivement jusqu'à environ 10 % pendant leur conservation au froid.

Après pelage, par exemple à l'aide d'une parmentière, les fruits sont coupés en tranches de 3 à 4 mm d'épaisseur : il importe en effet de ne pas mettre en oeuvre de tranches trop fines, qui se déformeraient au cours du traitement en laissant apparaître les fibres du fruit.

Le blanchiment qui constitue l'étape de prétraitement des tranches de kiwi-fruits sert à favoriser l'entrée de sucre dans le fruit car il détruit partiellement les structures cellulaires. Il sert aussi à prévenir le brunissement enzymatique des fruits. Il est avantageusement réalisé par immersion desdites tranches dans l'eau à 100° C pendant un temps de l'ordre de 1 minute, les conditions de cette opération devant être maîtrisées avec précision afin d'éviter une dégradation de la couleur des fruits.

Les sirops de sucre utilisés pour réaliser l'étape de déshydratation osmotique des tranches de fruits peuvent être des sirops de saccharose, de maltose, de fructose, de glucose ou de sucre inverti, ou d'un mélange de ces différents sucres, selon le caractère plus ou moins sucré que l'on veut conférer au produit.

Toutefois les sirops les plus avantageusement mis en oeuvre sont des sirops renfermant un mélange de saccharose et de sucre inverti, ce mélange étant de préférence constitué de 75 à 85 parties de saccharose pour 15 à 25 parties de sucre inverti.

En effet, le sucre inverti étant un inhibiteur de cristallisation du saccharose, son utilisation à un taux de 15 à 25 % en remplacement du saccharose contribue à donner une structure souple au produit fini, particulièrement après séchage, et à éviter le développement d'une cristallisation de surface qui lui conférerait un aspect blanchâtre. Par contre, une trop forte incorporation de sucre inverti, supérieure à 25 %, donne au produit une texture collante indésirable.

Les sirops mis en oeuvre sont avantageusement au nombre de quatre, et leurs concentrations,croissantes, sont préférentiellement de 25° Brix, 40° Brix, 60° Brix et 75° Brix.

Les additifs mis en oeuvre, et préalablement dissous dans les sirops de sucre, sont avantageusement utilisés en quantités également croissantes.

Le premier de ces additifs, à savoir le dioxyde de soufre, a été choisi car il permet de limiter le brunissement des tranches de fruits et d'améliorer la conservation du produit fini. Il est mis en oeuvre à des concentrations allant de 250 à 4000 p.p.m. et de préférence de 1000 à 3500 p.p.m. du premier au dernier sirop.

Le second additif, à savoir le chlorure de calcium, a été retenu car il permet de conserver leur couleur verte aux tranches de fruits. Il présente en outre des propriétés de raffermissement de la texture des kiwi-

2

fruits mûrs, qui n'interviennent toutefois pas lorsque l'on traite des fruits fraîchement récoltés. Le chlorure de calcium est mis en oeuvre, conformément à l'invention, à des concentrations allant de 0,02 à 0,5 % en poids, et de préférence de 0,05 à 0,3 % en poids du premier au dernier sirop.

Le troisième additif mis en oeuvre dans l'étape de déshydratation osmotique du procédé selon l'invention est l'acide citrique, choisi pour sa capacité à améliorer la saveur du produit fini. En effet, le kiwi-fruit présente une saveur acide caractéristique qui disparaît plus ou moins lors de la déshydratation osmotique, en raison de l'entrée de sucre qui se produit alors dans les tranches de fruits.

L'acide citrique est avantageusement mis en oeuvre, conformément à l'invention, à des concentrations allant de 0,04 à 0,08 % en poids, et de préférence de 0,08 à 0,4 % en poids du premier au dernier sirop.

Les concentrations de chacun des additifs dans les différents sirops mis en oeuvre augmentent avantageusement d'environ 50 % d'un sirop au suivant : ainsi, si l'on introduit dans le sirop à 25° Brix 0,1 % de $SO_2$, le sirop à 40° Brix en contiendra environ 0,15 %, celui à 60° Brix environ 0,22 % et celui à 75° Brix environ 0,33 %.

Le temps de séjour des tranches de kiwis dans les cuves renfermant les sirops de sucres varie en fonction du produit fini désiré : ainsi, pour des produits destinés à être séchés, ce temps de séjour est avantageusement de 24 à 48 heures dans chaque cuve, tandis que pour des produits destinés à être pasteurisés ou congelés, il est avantageusement réduit à environ 12 heures.

Le traitement est avantageusement effectué à température ambiante, sans agitation, de manière à ne pas encourir le risque d'une déformation des fruits en raison de leur fragilité, les tranches de kiwi-fruits étant disposées dans des paniers ajourés immergés pendant le temps nécessaire dans des bacs de polyéthylène contenant les différents sirops de sucre.

Une fois le traitement terminé, les tranches de fruits sont rapidement rincées à l'eau froide par aspersion de manière à éliminer la couche de sucre superficielle, puis elles sont soumises, selon le produit désiré, à un séchage, une pasteu risation ou une congélation.

Ainsi qu'il a déjà été dit, les tranches de kiwi-fruits destinées à être séchées sont soumises à un traitement de déshydratation plus long, séjournant dans chaque cuve de sirop pendant un temps allant de 24 à 48 heures : en effet, des tranches de fruits renfermant une teneur en sucre élevée sont particulièrement appropriées à être séchées, un produit séché supportant un goût sucré plus accentué.

Le séchage des tranches de fruits est avantageusement réalisé dans un sécheur à air chaud, dans lequel les tranches de fruits sont disposées en couches de 1 à 3 cm d'épaisseur, l'opération étant conduite à une température d'environ 40° pendant 7 à 8 heures. On obtient ainsi un produit renfermant 15 à 16 % d'humidité, qui peut être ensuite conditionné, par exemple sous sachets de matière plastique.

Les tranches de kiwi-fruits destinées à être pasteurisées ou congelées sont, ainsi qu'il a déjà été dit, des tranches de fruits soumises à un traitement de déshydratation plus court, de l'ordre de 12 heures dans chaque cuve de sirop : le produit obtenu renferme moins de sucre et plus d'eau et se prête bien à une conservation par pasteurisation ou congélation.

La pasteurisation des tranches de fruits s'effectue avantageusement, après conditionnement, par passage pendant 20 à 30 minutes dans un bain d'eau bouillante, le traitement étant suffisant quand la température à coeur du produit est de 75° C. Préalablement à la pasteurisation, les tranches de fruits peuvent être conditionnées soit dans des bocaux de verre, soit dans des sachets de matière plastique éventuellement mis sous vide.

La congélation des tranches de kiwi-fruits s'effectue de la manière habituelle pour ce type de produit, soit à - 20° C, après conditionnement des tranches, de préférence sous vide, dans des sachets de matière plastique.

Le procédé selon la présente invention se trouve illustré par l'exemple qui suit et qui en décrit un mode de réalisation, étant bien entendu que cette description ne présente au cun caractère limitatif vis-à-vis de l'invention.

## EXEMPLE

100 kg de kiwi-fruits conservés au froid après récolte sont sortis de la chambre froide, pelés à l'aide d'une parmentière et découpés en tranches de 4 mm, les deux extrémités étant enlevées. Les tranches sont ensuite immergées pendant 1 minute dans de l'eau bouillante puis aspergées d'eau froide de manière que leur refroidissement soit accéléré.

Elles sont ensuite placées dans des paniers ajourés et immergées successivement dans des bacs en poléthylène contenant quatre sirops différents dont les compositions sont indiquées dans le tableau ci-après (pour 100 kg de sirop), le sucre inverti mis en oeuvre étant le produit commercialisé sous le nom de "NEVULINE" par la Firme "Société des Produits du Maïs" :

| | Sirop à 25° Brix | Sirop à 40° Brix | Sirop à 60° Brix | Sirop à 75° Brix |
|---|---|---|---|---|
| Saccharose (kg) | 18,8 | 30 | 45 | 56,3 |
| Sucre inverti (kg) | 8,2 | 13,2 | 19,7 | 24,6 |
| Eau (kg) | 73 | 56,8 | 35,3 | 19,1 |
| $CaCl_2$ (g) | 70 | 110 | 170 | 200 |
| Acide citrique (g) | 83,3 | 133,3 | 200 | 250 |
| $SO_2$ (g) | 111,7 | 178,7 | 268 | 335 |

Une partie des tranches, destinées à être séchées, est maintenue pendant 24 heures dans chaque bac, tandis que l'au tre partie, destinée à la pasteurisation et à la congélation, est maintenue 12 heures dans chaque bac.

Après ce traitement de semi-confisage, les tranches sont rapidement rincées à l'eau droide par aspersion pour enlever la couche de sucre superficielle.

Les tranches destinées au séchage sont alors placées en couche de 3 cm dans un sécheur à air chaud réglé à 40° C, l'opération étant poursuivie pendant 7 heures, et les tranches obtenues sont conditionnées sous sachets de matière plastique.

Les tranches destinées à la pasteurisation sont tout d'abord mises sous vide dans des sachets en matière plastique puis les sachets sont pasteurisés par immersion dans un bain d'eau bouillante pendant 25 minutes.

Les tranches destinées à la congélation sont conditionnées sous vide de la même manière avant d'être congelées à - 20° C.

Ainsi qu'il a déjà été dit, les tranches de kiwi obtenues selon le procédé de l'invention, qu'elles soient séchées, pasteurisées ou congelées, présentent toutes les qualités d'apparence et de goût souhaitables, et ces qualités se maintiennent pendant toute la durée de leur conservation ou de leur entreposage.

Il va de soi que la présente invention ne saurait être limitée à la description qui précède d'un de ses modes de réalisation, susceptible de subir un certain nombre de modifications sans pour autant sortir du cadre de l'invention.

## Revendications

1) Procédé de fabrication de tranches semi-confites de kiwi-fruits, caractérisé en ce que des fruits renfermant environ 10 % de sucre sont soumis, après pelage et découpage en tranches de 3 à 4 mm d'épaisseur, à un blanchiment suivi d'une déshydratation osmotique par passages successifs dans des sirops de sucres de concentations croissantes additionnés de quantités également croissantes de dioxyde de soufre, de chlorure de calcium et d'acide citrique, le temps d'immersion dans chaque sirop variant de 12 heures à 48 heures, les produits ainsi obtenus étant ensuite soumis, selon le cas, à un séchage, une pasteurisation ou une congélation.

2) Procédé selon la revendication 1, caractérisé en ce que le blanchiment des tranches de fruits est réalisé par immersion dans un bain d'eau bouillante pendant une durée de l'ordre de 20 à 30 minutes.

3) Procédé selon la revendication 1, caractérisé en ce que la déshydratation osmotique des fruits est réalisée au moyen de sirops de sucres choisis dans le groupe formé par le saccharose, le maltose, le fructose, le glucose et le sucre inverti, ces sucres pouvant être pris isolément ou en combinaison.

4) Procédé selon la revendication 3, caractérisé en ce que les sirops de sucre mis en oeuvre sont constitués d'un mélange de saccharose et de sucre inverti, à raison de 75 à 85 parties de saccharose pour 15 à 25 parties de sucre inverti.

5) Procédé selon l'une quelconque des revendications précédentes, caractérisé en ce que la déshydratation osmotique est réalisée au moyen de quatre sirops de sucre titrant respectivement 25° Brix, 40° Brix, 60° Brix et 75° Brix.

4

6) Procédé selon l'une quelconque des revendications précédentes, caractérisé en ce que le dioxyde de soufre est mis en oeuvre dans les sirops à des concentrations allant de 250 à 4000 p.p.m. du premier au dernier sirop.

7) Procédé selon l'une quelconque des revendications précédentes, caractérisé en ce que le chlorure de calcium est mis en oeuvre dans les sirops à des concentrations allant de 0,02 à 0,5 % en poids du premier au dernier sirop.

8) Procédé selon l'une quelconque des revendications précédentes, caractérisé en ce que l'acide citrique est mis en oeuvre dans les sirops à des concentrations allant de 0,04 à 0,8 % en poids du premier au dernier sirop.

9) Procédé selon l'une quelconque des revendications précédentes, caractérisé en ce que le traitement de déshydratation osmotique est suivi d'un rinçage rapide des tranches de fruits par aspersion d'eau froide, en vue d'éliminer la couche de sucre superficielle.

10) Procédé selon l'une quelconque des revendications 1 à 9, caractérisé en ce que le temps de séjour des tranches de fruits dans chacun des sirops est compris entre 24 et 48 heures, les tranches ainsi obtenues étant destinées au séchage.

11) Procédé selon la revendication 10, caractérisé en ce que le séchage des fruits est réalisé par de l'air chaud à environ 40° pendant un temps de 7 à 8 heures.

12) Procédé selon l'une quelconque des revendications 1 à 9, caractérisé en ce que le temps de séjour des tranches de fruits dans chacun des sirops est de l'ordre de 12 heures, les tranches ainsi obtenues étant destinées à la pasteurisation ou à la congélation.

13) Procédé selon la revendication 12, caractérisé en ce que la pasteurisation est réalisée, après conditionnement des tranches de fruits, par passage dans un bain d'eau bouillante pendant 20 à 30 minutes.

14) Procédé selon la revendication 12, caractérisé en ce que la congélation est réalisée à - 20°C, après conditionnement des tranches de fruits, sous vide, dans des sachets de matière plastique.

# RAPPORT DE RECHERCHE EUROPEENNE

Numero de la demande

EP 89 44 0055

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 350 711 (M.L. KAHN et al.) <br> * Revendications 1,18,50; colonne 1, lignes 57-61; colonne 2, lignes 3-37; colonne 3, lignes 20-31; colonne 6, lignes 5-44; exemple 6; colonne 5, ligne 60 - colonne 6, ligne 4 * <br> --- | 1,2,3, 11,12, 14 | A 23 B 7/08 <br> A 23 G 3/00 |
| A | EP-A-0 130 660 (J.S. O'MAHONY et al.) <br> * Page 4, lignes 11-16; revendication 1 * <br> --- | 1,6 | |
| A | FR-A-2 112 859 (COPAFI) <br> --- | | |
| A | FR-A-2 112 858 (COPAFI) <br> ----- | | |

DOMAINES TECHNIQUES RECHERCHES (Int. Cl.5)

A 23 B
A 23 G

Le présent rapport a été établi pour toutes les revendications

| Lieu de la recherche | Date d'achèvement de la recherche | Examinateur |
|---|---|---|
| LA HAYE | 16-02-1990 | GUYON R.H. |